# FASCICULE DE BREVET EUROPEEN

(11) **EP 4 049 093 B1**
(45) Date de publication et mention de la délivrance du brevet: **13.05.2026**
(21) Numéro de dépôt: 20792696.5
(22) Date de dépôt: 23.10.2020
(51) Int. Cl.: G04B 21/08, G04B 21/12, G04B 23/02, G04B 23/12, G04B 37/00, G04B 21/00

(54) **PIECE D'HORLOGERIE GENERANT DES SONS**
UHR, DIE TÖNE ERZEUGT
TIMEPIECE GENERATING SOUNDS

(30) Priorité: 25.10.2019 EP 19205441
(43) Date de publication de la demande: 31.08.2022
(73) Titulaire: PATEK PHILIPPE SA GENEVE, 1204 Genève (CH)
(72) Inventeur: BENOIST, Quentin, 1228 Plan-les-Ouates (CH); GEISER, Sylvain, 1228 Plan-les-Ouates (CH); LE GALL, Eric, 1228 Plan-les-Ouates (CH); VANDINI, Alessandro, 1228 Plan-les-Ouates (CH)
(74) Mandataire: Bovard SA Neuchâtel
(86) Numéro de dépôt international: PCT/EP2020/079955
(87) Numéro de publication internationale: WO 2021/078972

(56) Documents cités:
- CH-A- 294 406
- CH-A- 4 918
- FR-A- 990 766

## Description

La présente invention concerne une pièce d'horlogerie, et plus spécifiquement une montre-bracelet, mécanique comprenant une boite présentant une carrure, un fond et une lunette, un dispositif générateur de vibrations destinées à produire au moins un son, logé dans ladite boite, un dispositif d'amplification des vibrations générées par ledit dispositif générateur de vibrations, et une membrane agencée pour recevoir lesdites vibrations amplifiées et générer un son de l'intérieur vers l'extérieur de la pièce d'horlogerie, et plus spécifiquement de la montre-bracelet.

Dans la présente description l'expression « pièce d'horlogerie ou montre-bracelet mécanique » signifie que la pièce d'horlogerie ou la montre-bracelet ne comprend que des éléments mécaniques pour effectuer ses différentes fonctions, et plus particulièrement que le son et son amplification sont produits uniquement aux moyens d'éléments mécaniques.

Une telle pièce d'horlogerie est par exemple une montre-bracelet à sonnerie (telle que répétition minutes, grande sonnerie, petite sonnerie, alarme de réveil) pour laquelle le dispositif générateur de vibrations est un timbre agencé pour être frappé par un marteau lorsque la sonnerie est enclenchée pour générer des vibrations afin de produire un son. Une montre à sonnerie comprend généralement deux timbres, l'un pour produire un son grave et l'autre pour produire un son aigu. Même si on joue avec les deux timbres et leur alternance pour sonner les heures différemment des quarts ou des minutes, la montre à sonnerie est limitée à seulement deux sons différents correspondant à chacun des deux timbres.

Le document FR990766 A décrit un mécanisme acoustique parlant ou sonore comportant un ou plusieurs disques mobiles comprenant chacun une série de gravures du type phonographique.

Par ailleurs, on connait une montre de poche permettant de donner l'heure parlée, telle que décrite dans le brevet CH 4918. La montre de poche comprend un stylet et un disque comprenant 48 sillons concentriques. Le stylet est commandé pour se positionner au-dessus du sillon qui lui est assigné, correspondant à l'heure à annoncer. Le disque est soulevé pour venir au contact du stylet et se met à tourner de sorte que le stylet lit sur le sillon l'heure à annoncer. Le son produit est donc très court, de quelques secondes, juste le temps d'annoncer l'heure.

Selon un premier aspect, la présente invention vise à remédier à ces inconvénients en proposant une montre-bracelet qui permet de générer une combinaison de plus de deux sons différents, permettant de reproduire par exemple une musique ou des paroles dans le volume limité d'une montre-bracelet.

Selon un autre aspect, la présente invention vise à proposer une pièce d'horlogerie permettant de générer des sons pendant une durée suffisamment longue pour permettre la reproduction d'un morceau de musique ou d'un discours par exemple.

Un autre but de la présente invention est de permettre d'amplifier les sons générés de manière significative, et de préférence en limitant, voire en supprimant, les bruits parasites.

A cet effet, la présente invention concerne une pièce d'horlogerie mécanique selon la revendication 1 annexée.

Selon l'invention, le dispositif générateur de vibrations est un élément rotatif comportant une surface de lecture comprenant au moins un sillon agencé pour générer des sons, et la pièce d'horlogerie mécanique comprend des moyens d'entrainement en rotation de l'élément rotatif, des moyens d'actionnement desdits moyens d'entrainement en rotation de l'élément rotatif, ainsi qu'un organe de transmission agencé pour coopérer avec l'élément rotatif pour transmettre au dispositif d'amplification les vibrations générées par le sillon lors d'un mouvement de rotation dudit élément rotatif.

D'une manière avantageuse, l'élément rotatif peut comprendre au moins un sillon de plusieurs spires hélicoïdales s'étendant sur sa surface de lecture, l'organe de transmission et l'élément rotatif étant agencés pour être mobiles l'un par rapport à l'autre de sorte que l'organe de transmission se déplace sur au moins une partie de la surface de lecture de l'élément rotatif lorsque ledit élément rotatif effectue plus d'une rotation.

Avantageusement, le dispositif d'amplification des vibrations comprend un levier monté pivotant sur un support dans un plan de pivotement non parallèle au plan de la membrane et agencé pour être actionné par l'organe de transmission pour transmettre audit levier les vibrations, ledit levier étant également solidaire de la membrane au moins en translation dans le plan de pivotement de sorte qu'un déplacement de l'organe de transmission généré par la vibration dudit organe de transmission en liaison avec l'élément rotatif et transmis à la membrane par l'intermédiaire du levier actionné par ledit organe de transmission génère un déplacement amplifié de ladite membrane, de manière à générer un son amplifié.

Ainsi, la présente invention permet de générer des combinaisons de plusieurs sons, et de préférence sur une durée de plusieurs secondes, préférentiellement au moins une dizaine de secondes, et plus préférentiellement au moins une voire plusieurs minutes, permettant de reproduire un morceau de musique, ou des paroles, le son étant amplifié de manière significative en limitant, voire en supprimant, les bruits parasites, dans le volume restreint d'une montre-bracelet mécanique.

De manière avantageuse, le dispositif générateur de vibrations est un élément rotatif comportant une surface de lecture comprenant au moins un sillon de plusieurs spires hélicoïdales agencé pour générer des sons et s'étendant sur ladite surface de lecture, et la pièce d'horlogerie comprend des moyens d'entrainement en rotation de l'élément rotatif, des moyens d'actionnement desdits moyens d'entrainement en rotation de l'élément rotatif, ainsi qu'un organe de transmission agencé pour coopérer avec l'élément rotatif pour transmettre au dispositif d'amplification les vibrations générées par les sillons lors de la rotation dudit élément rotatif, l'organe de transmission et l'élément rotatif étant agencés pour être mobiles l'un par rapport à l'autre de sorte que l'organe de transmission se déplace sur au moins une partie de la surface de lecture de l'élément rotatif lorsque ledit élément rotatif effectue plus d'une rotation.

D'une manière avantageuse, le dispositif d'amplification des vibrations comprend des moyens de guidage en translation dans un plan parallèle au plan de la membrane agencés pour permettre audit dispositif d'amplification de suivre le déplacement de l'organe de transmission sur au moins une partie de la surface de lecture de l'élément rotatif lorsque ledit élément rotatif effectue plus d'une rotation, et des moyens d'accouplement mobile entre le dispositif d'amplification et la membrane agencés pour permettre audit dispositif d'amplification de rester lié à ladite membrane lors de son déplacement.

Ainsi, la présente invention permet de générer des combinaisons de plusieurs sons sur une durée de plusieurs secondes à plusieurs minutes, permettant de reproduire au moyen d'une pièce d'horlogerie mécanique, un morceau de musique, ou des paroles, le son étant amplifié de manière significative en limitant, voire en supprimant, les bruits parasites liés aux vibrations des pièces du mouvement.

D'autres caractéristiques et avantages de la présente invention apparaîtront à la lecture de la description détaillée suivante de différents modes de réalisation de l'invention, donnés à titre d'exemples non limitatifs, et faite en référence aux dessins annexés dans lesquels :
- la figure 1 est une vue en coupe de la boite d'une montre-bracelet ou d'une pièce d'horlogerie selon l'invention ;
- la figure 2 est une vue de dessus, côté cadran d'une montre-bracelet selon l'invention ;
- la figure 3 est une vue de dessus du dispositif d'amplification des vibrations utilisé dans la présente invention ;
- la figure 4 est une vue en coupe du dispositif d'amplification des vibrations et de la membrane ;
- la figure 5 est une vue d'une aiguille utilisée dans la présente invention ;
- la figure 6 est une vue en coupe de la membrane et de la chambre de compression ;
- la figure 7 est une vue des moyens de réglage du volume du son généré par la membrane ;
- les figures 8 et 9 sont des vues partielles en coupe montrant respectivement les moyens de réglage du volume en position fermée et en position ouverte ; et
- la figure 10 est une vue en perspective de la pièce d'horlogerie selon l'invention montrant la fermeture des ouvertures de la chambre de compression en dehors du temps de génération du son.

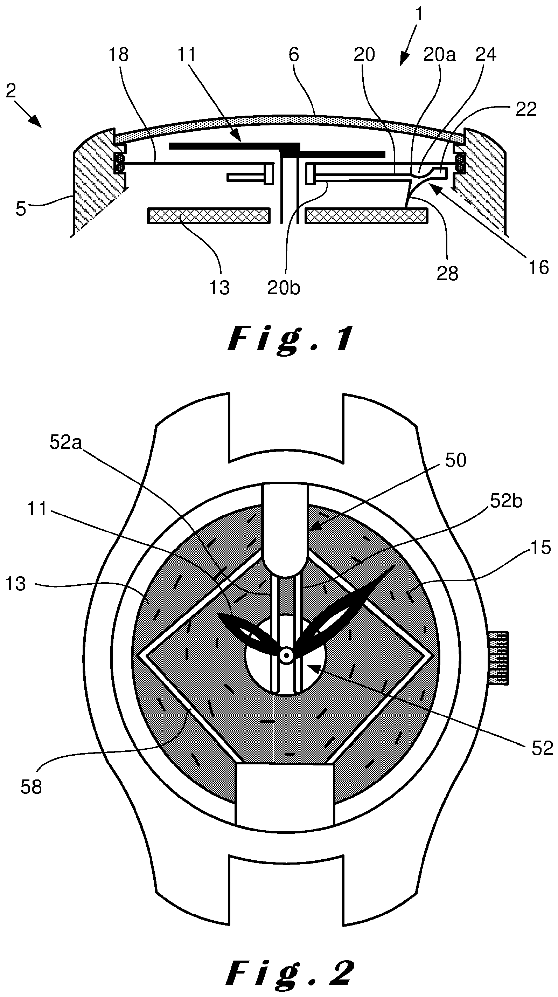

Selon un premier aspect, la présente invention concerne une montre-bracelet mécanique destinée à être portée par un utilisateur, à son poignet. En référence aux figures 1, 2 et 10, ladite montre-bracelet 1 comprend une boite 2 présentant une carrure 3, un fond 4 fermé par une glace 7, une lunette 5 fermée par une glace 6, un dispositif générateur de vibrations destinées à produire au moins un son de manière mécanique, logé dans ladite boite 2, un dispositif d'amplification des vibrations 16 générées par ledit dispositif générateur de vibrations et une membrane 18 agencée pour recevoir lesdites vibrations amplifiées mécaniquement et générer un son de l'intérieur vers l'extérieur de la montre-bracelet 1. La lunette et la carrure peuvent être deux pièces différentes, ou former une seule pièce monobloc. De même, le fond et la carrure peuvent être deux pièces différentes ou former une seule pièce monobloc. La boite 2 peut également renfermer un mouvement mécanique horloger permettant d'afficher l'heure au moyen d'aiguilles 11 placées entre la membrane 18 et la glace 6. Le dispositif générateur de vibrations et le dispositif d'amplification des vibrations peuvent être indépendants du mouvement, sous la forme d'un module, sauf si une liaison avec une alarme est nécessaire.

Selon l'invention, le dispositif générateur de vibrations est un élément rotatif 13 comportant une surface de lecture comprenant au moins un sillon 15 agencé pour générer des sons, et la montre-bracelet comprend des moyens d'entrainement en rotation de l'élément rotatif 13, des moyens d'actionnement desdits moyens d'entrainement en rotation de l'élément rotatif 13, ainsi qu'un organe de transmission 28 agencé pour coopérer avec l'élément rotatif 13 pour transmettre au dispositif d'amplification 16 les vibrations générées par le sillon 15 lors d'un mouvement de rotation dudit élément rotatif 13.

Dans la description qui suit, le dispositif générateur de vibrations, le dispositif d'amplification des vibrations et la membrane sont agencés pour générer des sons par le côté cadran de la montre-bracelet, et plus particulièrement par la glace 6. Il est bien évident que le dispositif générateur de vibrations, le dispositif d'amplification des vibrations et la membrane peuvent être agencés de manière similaire mais à l'inverse pour générer des sons côté fond de la montre-bracelet, et plus particulièrement par la glace 7.

L'élément rotatif 13 contient l'information sonore à produire sous la forme de sillons 15. Ces sillons 15 sont gravés sur l'élément rotatif 13 de manière appropriée pour générer tout type de son, par exemple des sons sous la forme de paroles (discours par exemple) ou de musique (musique classique, électronique, etc.). La rotation de l'élément rotatif 13 permet de générer des vibrations sur la membrane 18 par l'intermédiaire de l'organe de transmission 28 et du dispositif 16 d'amplification des vibrations. Selon le premier aspect de l'invention, l'élément rotatif 13 peut comprendre un ou plusieurs sillons constitués chacun d'une spire, les dites spires étant concentriques dans le cas de plusieurs sillons, ou l'élément rotatif 13 peut comprendre un ou plusieurs sillons constitués chacun de plusieurs spires hélicoïdales, les sillons étant discontinus si l'on souhaiter former plusieurs pistes.

D'une manière avantageuse, l'élément rotatif 13 est un disque plat monté dans la lunette 5 parallèlement au cadran (ou au fond) de la montre, en rotation par exemple autour de l'axe des aiguilles 11. Ce disque plat peut même être agencé pour constituer un cadran pour ladite montre-bracelet. Le disque peut être réalisé en métal (acier, CuBe, etc.). Les sillons 15 sont gravés de manière mécanique (fraise, pointe à graver, etc.) ou par laser. Le disque peut également être réalisé par croissance galvanique (LIGA). Il peut aussi être en silicium, réalisé par DRIE. La céramique, un composite ou un polymère peuvent être également utilisés.

L'élément rotatif 13 peut également être constitué par un cylindre, placé autour du mouvement, les sillons étant placés sur son pourtour intérieur ou extérieur.

L'élément rotatif 13 doit avoir la masse et l'inertie la plus faible possible et être équilibré pour obtenir une accélération rapide et ne pas être influencé par les accélérations (gravité, chocs, etc.).

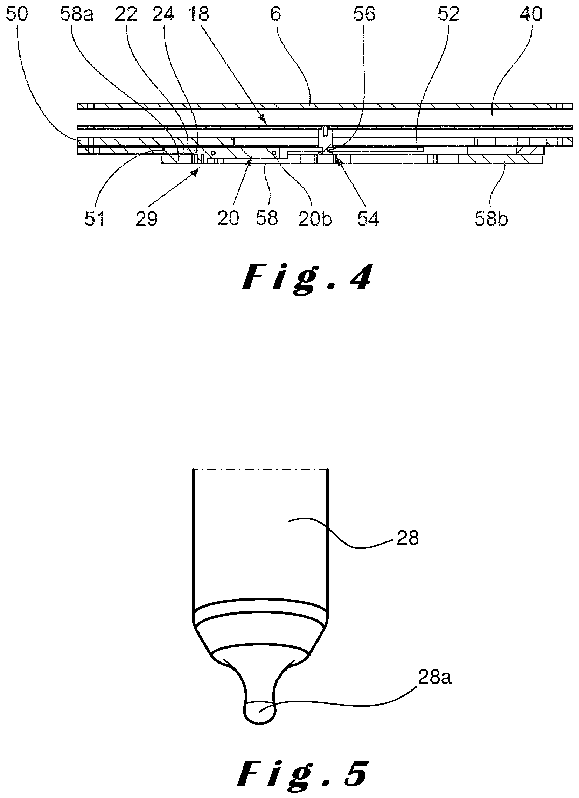

De préférence, l'organe de transmission 28 est une aiguille agencée pour suivre au moins un sillon 15 de l'élément rotatif 13, ladite aiguille étant solidaire du dispositif 16 d'amplification des vibrations. Une telle aiguille est représentée sur la figure 5. Elle doit être fine et dure pour ne pas s'user trop rapidement. Elle peut être réalisée en acier, en CuBe, en céramique, métal dur, rubis, etc... Son extrémité 28a pour lire le sillon peut être sphérique comme représentée ou conique.

Afin de garantir un nombre d'écoutes important, le couple tribologique entre l'élément rotatif 13 et l'organe de transmission 28 est important car c'est le frottement de l'organe de transmission 28 dans les sillons 15 qui génère la vibration. En cas d'usure la qualité sonore serait directement impactée.

D'une manière avantageuse, les moyens d'entrainement en rotation de l'élément rotatif 13 comprennent un ressort, de type ressort de barillet. Le ressort est configuré pour fournir l'énergie nécessaire au fonctionnement de l'élément rotatif 13 pour assurer une seule lecture ou plusieurs lectures.

La montre-bracelet comprend également un mécanisme d'armage du ressort. Dans le cas d'une seule lecture, le ressort peut être remonté par un verrou de type répétition minute. Pour un mécanisme agencé pour plusieurs lectures, le ressort peut être remonté par une tige de remontoir, de manière similaire au barillet du mouvement.

De plus, la montre-bracelet comprend un régulateur agencé pour contrôler la vitesse de rotation de l'élément rotatif 13. Ce régulateur peut être de type volant d'inertie (similaire à ceux utilisés dans une répétition minute), de type échappement avec balancier ou guidage flexible, de type à ailette, ou régulé par sa propre inertie.

Les moyens d'actionnement des moyens d'entrainement en rotation de l'élément rotatif peuvent être de différents types en fonction des moyens d'entrainement, de la lecture sur un ou plusieurs tours, et de la fonction des sons générés. Ainsi, les moyens d'actionnement des moyens d'entrainement en rotation de l'élément rotatif peuvent comprendre un verrou, de type répétition minute, permettant l'armage du ressort comme décrit ci-dessus ainsi que l'enclenchement de la rotation de l'élément rotatif 13. Le cas échéant le verrou peut être également agencé pour amener l'organe de transmission dans une position initiale de lecture au début de la surface de lecture, comme cela sera décrit en détails ci-après.

Les moyens d'actionnement des moyens d'entrainement en rotation de l'élément rotatif peuvent également comprendre un poussoir agencé pour amener l'organe de transmission dans une position initiale de lecture au début de la surface de lecture, comme cela sera décrit en détails ci-après, lors de l'actionnement du poussoir, puis enclencher la rotation de l'élément rotatif 13 et permettre la lecture, lors du relâchement dudit poussoir.

Lorsque le son généré est utilisé comme alarme de réveil, les moyens d'actionnement des moyens d'entrainement en rotation de l'élément rotatif peuvent comprendre un mécanisme d'enclenchement lié à une heure prédéterminée et coopérant avec le mouvement horloger.

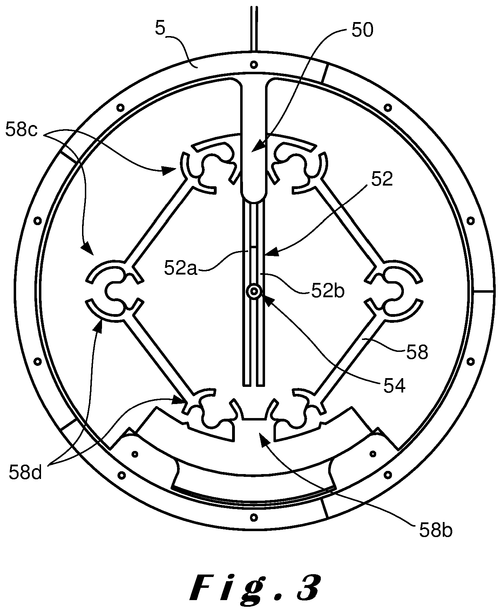

En référence plus particulièrement aux figures 1, 3 et 4, afin d'amplifier les sons produits par l'élément rotatif 13, le dispositif d'amplification 16 des vibrations générées par ledit élément rotatif 13 comprend un levier 20 lié à un support 22 par une articulation selon un seul axe de rotation, de sorte que ledit levier 20 est monté basculant ou pivotant sur ledit support 22 autour dudit axe de rotation, dans un plan de pivotement non parallèle au plan de la membrane 18.

D'une manière particulièrement préférée, le levier 20 est monté pivotant sur son support 22 de sorte qu'il bascule dans un plan de pivotement qui est perpendiculaire au plan défini par la membrane 18.

D'une manière particulièrement préférée, le levier 20 est monté pivotant sur le support 22 au moyen d'une rotule flexible 24. La rotule flexible permet en cas de besoin de modifier le sens des vibrations. Une goupille montée transversalement sur le support 22 et constituant l'axe de pivotement du levier 20 pourrait être également utilisée.

Le levier 20 est agencé pour être actionné par l'organe de transmission 28 coopérant avec l'élément rotatif 13 pour transmettre au levier 20 les vibrations générées par les sillons 15. L'organe de transmission 28, ici l'aiguille, est de préférence solidaire du levier 20. Il est monté, par exemple par encastrement ou brasage. A cet effet, le levier 20 comporte un orifice 29 dans lequel l'aiguille est introduite.

Le levier 20 est également solidaire de la membrane 18 au moins en translation dans le plan de pivotement du levier 20 afin de pouvoir déplacer ladite membrane 18 dans le plan de pivotement du levier 20 lors de son basculement. Ainsi, un déplacement de l'organe de transmission 28 généré par la vibration dudit organe de transmission 28 en liaison avec l'élément rotatif et transmis à la membrane 18 par l'intermédiaire du levier 20 actionné par ledit organe de transmission 28 génère un déplacement amplifié de ladite membrane 18, de manière à générer un son amplifié. C'est le mouvement linéaire de la membrane 18 déplacée par le levier 20 qui va générer un son amplifié.

Plus spécifiquement, le levier 20 comprend une première extrémité 20a montée pivotante sur le support 22 dans un plan de pivotement non parallèle au plan de la membrane 18 et solidaire de l'organe de transmission 28 et une seconde extrémité 20b solidaire de la membrane 18 au moins en translation dans le plan de pivotement dudit levier 20, comme cela sera décrit ci-après.

Dans le cas d'un élément rotatif comprenant un seul sillon formé d'une seule spire, ou un ensemble de sillons à spires concentriques (dans ce cas, la montre-bracelet comprend un mécanisme de positionnement de l'organe de transmission agencé pour positionner l'organe de transmission en regard du sillon qui lui est assigné), l'organe de transmission 28 est fixe par rapport à l'élément rotatif 13 au moment de la lecture. Le levier 20 est alors fixe en translation et est lié à la membrane 18 de manière fixe, c'est-à-dire qu'il est solidaire de la membrane 18 en rotation et en translation. La fixation du levier 20 à la membrane 18 peut se faire par exemple au moyen d'une vis vissée dans un trou prévu sur la membrane 18 et dans un trou prévu sur le levier 20, ou par collage, soudage, etc..

D'une manière particulièrement préférée, l'élément rotatif 13 comprend au moins un sillon formé de plusieurs spires hélicoïdales s'étendant sur sa surface de lecture, permettant une lecture de l'élément rotatif 13 sur plusieurs tours, ce qui permet d'augmenter le temps de lecture. Dans ce cas, l'organe de transmission 28 et l'élément rotatif 13 sont agencés pour être mobiles l'un par rapport à l'autre de sorte que l'organe de transmission 28 se déplace sur au moins une partie de la surface de lecture de l'élément rotatif 13 lorsque ledit élément rotatif effectue plus d'une rotation. Cela signifie que soit l'organe de transmission 28 est déplacé, l'élément rotatif 13 restant en position fixe, soit inversement l'organe de transmission 28 reste en position fixe, l'élément rotatif 13 étant déplacé.

De préférence, dans la variante représentée, l'organe de transmission 28 est déplacé, l'élément rotatif 13 restant en position fixe.

Le dispositif 16 d'amplification des vibrations solidaire de l'organe de transmission 28 doit donc être agencé pour pouvoir suivre les déplacements dudit organe de transmission 28. Une liaison mobile entre le levier 20 et la membrane 18 soit donc être prévue.

A cet effet, le dispositif 16 d'amplification des vibrations comprend des moyens de guidage en translation dans un plan parallèle au plan de la membrane 18 agencés pour permettre audit dispositif 16 d'amplification de suivre le déplacement de l'organe de transmission 28 sur au moins une partie de la surface de lecture de l'élément rotatif lorsque ledit élément rotatif 13 effectue plus d'une rotation, et des moyens d'accouplement mobile entre le dispositif 16 d'amplification et la membrane 18 agencés pour permettre audit dispositif d'amplification 16 de rester lié à ladite membrane 18 lors de son déplacement.

D'une manière avantageuse, lesdits moyens de guidage en translation du dispositif d'amplification comprennent un élément d'appui 50 solidaire de la boite 2 et le long duquel le support 22 du levier 20 peut s'appuyer et coulisser dans un plan parallèle au plan de la membrane 18. Un ressort 51 permet de garantir un bon appui du support 22 sur l'élément d'appui 50. L'élément d'appui 50 peut être monté sur la lunette 5 si le son est généré côté cadran ou sur le fond 4 si le son est généré côté fond, voire sur la carrure. Il est réalisé en matériau rigide. Il présente une longueur suffisante pour permettre le guidage du support 22 sur tout son déplacement.

Les moyens d'accouplement mobile comprennent une fourchette 52 solidaire de la seconde extrémité 20b du levier et un pion 54 solidaire de la membrane 18 et comportant une gorge 56 dans laquelle se logent les deux dents 52a, 52b de la fourchette. Ainsi, ladite fourchette 52 étant en prise avec le pion 54, en plus spécifiquement en contact avec les faces latérales du pion 54 dans sa gorge 56, peut coulisser de part et d'autre dudit pion 54 dans un plan parallèle au plan de la membrane 18, tout en étant solidaire en translation du pion 54 dans le plan de pivotement, par appui sur le pion 54. Ainsi, un déplacement de l'aiguille généré par la vibration de l'aiguille en liaison avec l'élément rotatif 13 et transmis à la membrane 18 par l'intermédiaire du levier 20 actionné par ladite aiguille génère un déplacement amplifié de ladite membrane 18, de manière à générer un son amplifié.

D'une manière avantageuse, le dispositif 16 d'amplification des vibrations comprend des bras stabilisateurs 58 articulés solidaires du levier 20. Ces bras 58 peuvent se présenter sous la forme d'un pantographe, un sommet du pantographe 58a étant solidaire du support 22 du levier 20 et le sommet opposé 58b étant solidaire de la boite 2 (lunette, fond ou carrure) ou du mouvement de la montre-bracelet. Les articulations peuvent avantageusement se présenter sous la forme de rotules flexibles 58c. Des butées 58d peuvent être prévues pour limiter le mouvement du pantographe.

Lorsque la lecture de l'élément rotatif 13 est réalisée sur plusieurs tours, la montre-bracelet comprend un mécanisme d'amenée de l'organe de transmission 28 dans une position initiale correspondant au début de la surface de lecture de l'élément rotatif 13, avant ou simultanément à l'actionnement des moyens d'actionnement des moyens d'entrainement en rotation dudit l'élément rotatif 13. Ce mécanisme d'amenée coopère par exemple avec le verrou ou le poussoir décrits plus haut.

Le point d'actionnement du levier 20 par l'organe de transmission 28, le point de pivotement du levier 20 et le point de liaison du levier 20 avec la membrane 18 sont positionnés de sorte qu'un déplacement de l'organe de transmission 28 généré par la vibration dudit organe de transmission 28 en liaison avec l'élément rotatif 13 et transmis à la membrane 18 par l'intermédiaire du levier 20 actionné par ledit organe de transmission 28 génère un déplacement amplifié de ladite membrane 18 par un effet mécanique de bras de levier, ce qui permet de générer un son amplifié.

De préférence, la rotule flexible 24 est positionnée sur le centre de masse de l'ensemble organe de transmission/levier/membrane.

De préférence, le point de liaison du levier 20 avec la membrane 18 se situe à une distance du centre de ladite membrane 18 inférieure à 40%, préférentiellement inférieure à 20%, de la largeur de ladite membrane 18. De manière particulièrement préférée, le point de liaison du levier 20 avec la membrane 18 se situe au centre de ladite membrane 18, afin d'avoir un effet de bras de levier maximal.

Dans une autre variante, on peut prévoir de positionner le point de liaison à la périphérie de la membrane, en jouant sur l'élasticité du point de fixation et la torsion de la membrane.

Dans le cas où l'organe de transmission 28 et le levier 20 sont déplacés, l'élément rotatif 13 restant en position fixe, la diminution de l'amplification du son du fait de la diminution de l'effet de bras de levier est compensée en ayant augmenté l'amplitude de la vibration générée par le sillon lu par l'organe de transmission 28.

Afin de ne pas endommager l'élément rotatif 13 et/ou l'organe de transmission 28, il est prévu un système de sécurisation en cas de chocs.

D'une manière avantageuse, le dispositif d'amplification des vibrations, et plus particulièrement le support 22 du levier 20 est isolé du mouvement et du bâti. A cet effet, le support 22 du levier 20 peut être monté sur un élément de l'habillage et plus particulièrement sur la lunette 5 si le son est transmis côté cadran, sur le fond 4, si le son est transmis par le fond.

Le support 22 du levier 20 peut également être monté sur le mouvement, voire sur la carrure 3, mais par l'intermédiaire d'un élément isolant, tel qu'un polymère, afin de garantir l'isolement du support 22 du mouvement, de la carrure et du bâti.

Lorsque le support 22 du levier 20 est monté sur l'un des éléments de la boite (lunette 5, carrure 3, fond 4), il est également possible d'isoler le mouvement du reste de la montre en disposant un dispositif d'isolation sur le mouvement, entre le mouvement et ledit élément de la boite qui porte le support 22 du levier 20. Un tel dispositif d'isolation peut être par exemple un cercle de laiton associé à un joint plat ou un cercle d'isolation en polyétheréthercétone (PEEK) chargé en carbone. Par exemple, afin d'isoler le mouvement, ce dernier peut être bridé sur un cercle d'isolation en PEEK, lui-même vissé dans la carrure.

Lorsque le support 22 du levier 20 est monté sur la lunette 5, respectivement sur le fond 4, ladite lunette 5, respectivement ledit fond 4 peut être assemblé directement sur la carrure 3 de manière classique. Toutefois, afin de s'assurer qu'aucune ou peu de vibration parasite n'arrivera sur la carrure 3 et donc au mouvement, ladite lunette 5, respectivement ledit fond 4 est assemblé sur la carrure 3 par l'intermédiaire d'un élément isolant, tel qu'un polymère.

La membrane 18 est montée sur le fond 4, si le son est transmis par le fond, ou la lunette 5 si le son est transmis côté cadran. Ainsi, la membrane 18 est également isolée du mouvement.

En conséquence, le dispositif d'amplification des vibrations et la membrane sont isolés du mouvement et du bâti de sorte que toutes les vibrations de l'élément rotatif 13 récupérées par le levier 20 sont dirigées et transmises à la membrane 18, sans transmission au mouvement, au bâti ou à la carrure.

Le levier 20 est de préférence réalisé dans un matériau très léger et très rigide. Par exemple, le levier 20 peut être réalisé en acier, titane, aluminium, magnésium, matériau composite, carbone, verre, saphir et céramique.

La membrane 18 doit pouvoir vibrer librement. Elle est de préférence réalisée dans un matériau très léger et rigide afin d'avoir une grande réponse dynamique et de ne pas se déformer lors de son déplacement. La membrane 18 est réalisée de préférence en un matériau transparent. Par exemple, la membrane 18 peut être réalisée sous la forme d'une plaque, en saphir, verre minéral, plexiglas, etc.. Ainsi, la membrane 18 peut être constituée par une glace intérieure disposée sous la glace 6 (ou la glace 7 le cas échéant). La membrane 18 peut également être réalisée en matériaux composites, cellulose, ou verre composite du type verre de sécurité. Il est bien évident que la membrane 18 peut également être réalisée en un matériau non totalement transparent, tels que des matériaux translucides ou opaques, tels que verre métallique, titane, silicium, céramique, composite fibre de carbone, cellulose, kevlar.

La membrane 18 doit être la plus rigide et la plus légère possible. Pour cela, son épaisseur est inférieure à 1 mm, de préférence inférieure à 0.5 mm et plus préférentiellement inférieure à 0.3 mm.

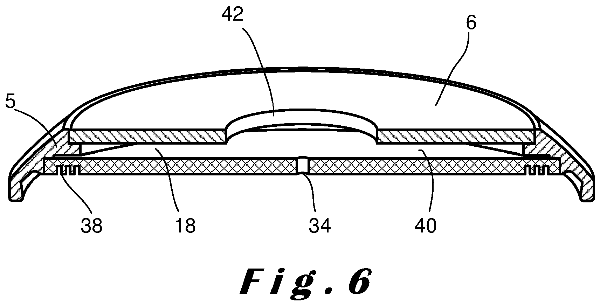

En référence plus spécifiquement à la figure 6, la membrane 18 est de préférence montée sur une suspension pour lui permettre de vibrer librement tout en assurant l'étanchéité. La suspension peut être réalisée au moyen d'un joint de forme disposé autour de la membrane 18 ou de joint O-ring disposé à la périphérie de part et d'autre de la membrane 18, entre ladite membrane 18 et la lunette 5 (ou le fond 4 le cas échéant). Il est également possible de structurer la membrane 18 pour améliorer sa flexibilité, au moyen par exemple de rainures 38 prévues à la périphérie de la membrane 18. Il est également possible de jouer sur l'épaisseur de la membrane 18.

D'une manière avantageuse, la montre-bracelet comprend en outre une chambre de compression 40 agencée pour amplifier le son qui a été généré par le déplacement de la membrane, en étant déjà amplifié une première fois, avant sa sortie vers l'extérieur.

La chambre de compression 40 est fermée par une paroi disposée en aval de la membrane 18 et présentant au moins une ouverture 42 dirigée vers l'extérieur de la pièce. Les dimensions de l'ouverture 42 sont choisies par rapport à la surface de la membrane 18 en fonction de l'amplification du son recherchée.

De préférence, lorsque la membrane 18 est disposée sur la lunette (ou le fond 4), ladite paroi est constituée par la glace 6 (ou la glace 7). Ladite glace 6 ou 7 doit être résistante et inrayable. Elle est de préférence réalisée en saphir.

La paroi disposée en aval de la membrane 18 permet de générer un certain volume d'air dans la chambre de compression 40. Le déplacement de la membrane 18 génère une compression de cet air. Le rapport entre la surface de la membrane 18 en mouvement définissant le volume d'air et la taille des ouvertures va permettre de générer une seconde amplification du son.

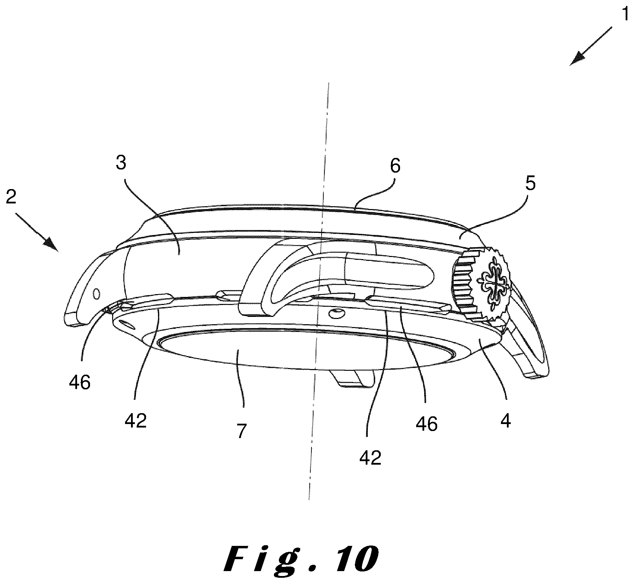

L'ouverture 42 peut se présenter sous différentes formes : trou au centre de la paroi, ici la glace 6, plusieurs trous latéraux, une multitude de micro-trous, etc.. La forme de l'ouverture en sortie peut être conique pour amplifier davantage le son. D'une manière avantageuse, l'ouverture 42 peut se présenter sous la forme d'une ou plusieurs rainures longitudinales s'étendant autour de la carrure, parallèlement au plan du mouvement, et obtenues en laissant un espace par exemple entre le fond 4 et la carrure 3 si la membrane 18 est disposée sur le fond 4, comme représentées sur la figure 10. De telles ouvertures latérales 42 permettent avantageusement de rediriger le son généré par la membrane 18 sur le bras du porteur de la montre-bracelet, en donnant audit porteur la sensation d'un son encore plus amplifié.

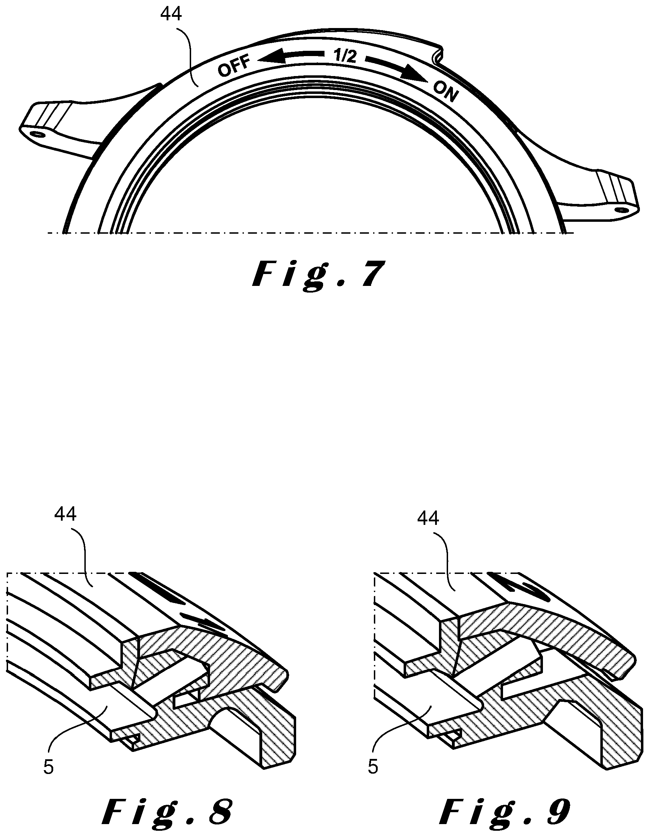

En référence aux figures 7 à 9, la montre-bracelet comprend avantageusement des moyens d'obturation 44 modulables de l'ouverture 42 de la chambre de compression 40 agencés pour pouvoir régler le volume du son généré par la membrane 18. Ces moyens d'obturation 44 sont agencés pour pouvoir être déplacés entre une position de fermeture dans laquelle l'ouverture 42 est entièrement fermée et une position d'ouverture dans laquelle l'ouverture 42 est maximale, les positions intermédiaires permettant de boucher plus ou moins l'ouverture 42 pour régler le volume sonore. Par exemple, lorsque l'ouverture 42 est latérale, les moyens d'obturation 44 peuvent comprendre un élément rotatif tel qu'une bague, montée en rotation sur la lunette 5 (ou le fond 4 le cas échéant), et agencée pour tourner entre une position de fermeture dans laquelle l'ouverture 42 est entièrement bouchée, comme le montre la figure 8, et une position d'ouverture dans laquelle l'ouverture 42 est maximale, comme le montre la figure 9.

D'une manière avantageuse, l'ouverture 42 peut être protégée par un filtre perméable à l'air et imperméable à l'eau, afin d'éviter que les impuretés ne rentrent dans la chambre de compression 40. De tels filtres sont connus de l'homme du métier.

D'une manière avantageuse, et en référence à la figure 10 dans laquelle les dispositifs et la membrane sont agencés côté fond, le son étant généré côté fond, la montre-bracelet peut comprendre un mécanisme de fermeture de l'ouverture 42 de la chambre de compression 40 agencé pour fermer ladite ouverture 42 une fois le son généré, par exemple en dehors du temps de sonnerie. Un tel mécanisme permet de limiter l'entrée d'impuretés lorsque le dispositif générateur de vibrations n'est pas utilisé. En particulier, lorsque l'ouverture 42 est latérale, le mécanisme de fermeture peut comprendre un organe de fermeture 46, tel qu'une bague, commandé par le mécanisme de sonnerie de sorte à fermer l'ouverture 42 automatiquement une fois la sonnerie terminée. Un tel mécanisme est décrit par exemple dans le brevet CH 704 940.

Lorsque la membrane 18 est disposée sur le fond 4 et que le son est généré côté fond, il est également possible de prévoir un réflecteur, agencé pour permettre au son généré de remonter sur le côté de la montre. Un tel réflecteur est par exemple positionné sur l'extérieur du fond, et présente des parois coniques extérieures entourant le fond et dirigées vers la montre.

La montre-bracelet selon l'invention permet, au moyen de l'élément rotatif comportant des sillons gravés, de générer des combinaisons de plusieurs sons, et de préférence sur une durée de plusieurs secondes à plusieurs minutes, permettant de reproduire un morceau de musique, ou des paroles, dans le volume restreint d'une montre-bracelet mécanique.

De plus, la montre-bracelet selon l'invention permet une amplification significative du son : le rapport de la première amplification réalisée par l'intermédiaire du levier 20 est de l'ordre de 10 à 16. De plus, en raison du ratio entre la surface en mouvement de la membrane 18 et l'ouverture 42 (ratio de surface de 20 à 30), le rapport de la seconde amplification est de l'ordre de 1.5. Le rapport de l'amplification totale réalisée par la montre selon l'invention est tel qu'un son supérieur à 80 dB peut être obtenu, voire 90 dB, par rapport à un son standard de répétition minute de 60 dB.

De plus, la construction et le montage du dispositif d'amplification permettent d'isoler l'élément rotatif et la membrane du mouvement, du bâti et de la carrure, de sorte que toutes les vibrations sont dirigées sur la membrane au moyen du levier sans passer par le mouvement. Il ne se produit donc peu, voire aucun son parasite généralement lié aux vibrations des composants du mouvement.

En outre, le dispositif d'amplification avec la membrane étant solidaire du fond ou de la lunette, il est possible d'accéder facilement au mouvement après le seul démontage du fond, respectivement de la lunette.

Enfin, la construction du dispositif d'amplification avec la membrane est telle que l'étanchéité de la boite n'a pas d'impact sur le volume sonore, contrairement à tous les autres principes des répétitions minutes par exemple. En effet, la membrane avec sa suspension rend le système étanche à l'exception de la chambre de compression 40. Cette dernière peut être rendue étanche par un système de filtre.

Selon un autre aspect, la présente invention concerne plus généralement une pièce d'horlogerie 1 mécanique comprenant une boite 2 présentant une carrure 3, un fond 4 et une lunette 5, un dispositif générateur de vibrations destinées à produire au moins un son de manière mécanique, logé dans ladite boite 2, un dispositif 16 d'amplification mécanique des vibrations générées par ledit dispositif générateur de vibrations et une membrane 18 agencée pour recevoir lesdites vibrations amplifiées mécaniquement et générer un son de l'intérieur vers l'extérieur de la pièce d'horlogerie, le dispositif générateur de vibrations étant un élément rotatif 13 comportant une surface de lecture comprenant au moins un sillon 15 formé de plusieurs spires hélicoïdales agencé pour générer des sons et s'étendant sur ladite surface de lecture. Ladite pièce d'horlogerie comprend des moyens d'entrainement en rotation de l'élément rotatif 13, des moyens d'actionnement desdits moyens d'entrainement en rotation de l'élément rotatif 13, et un organe de transmission 28 agencé pour coopérer avec l'élément rotatif 13 pour transmettre au dispositif d'amplification 16 les vibrations générées par les sillons 15 lors de la rotation dudit élément rotatif 13, l'organe de transmission 28 et l'élément rotatif 13 étant agencés pour être mobiles l'un par rapport à l'autre de sorte que l'organe de transmission 28 se déplace sur au moins une partie de la surface de lecture de l'élément rotatif 13 lorsque ledit élément rotatif 13 effectue plus d'une rotation.

D'une manière avantageuse, le dispositif 16 d'amplification des vibrations comprend des moyens de guidage en translation dans un plan parallèle au plan de la membrane 18 agencés pour permettre audit dispositif 16 d'amplification de suivre le déplacement de l'organe de transmission 28 sur au moins une partie de la surface de lecture de l'élément rotatif 13 lorsque ledit élément rotatif 13 effectue plus d'une rotation, et des moyens d'accouplement mobile entre le dispositif 16 d'amplification et la membrane 18 agencés pour permettre audit dispositif d'amplification 16 de rester lié à ladite membrane 18 lors de son déplacement.

D'une manière avantageuse, le dispositif 16 d'amplification des vibrations comprend un levier 20 présentant une première extrémité 20a montée pivotante sur un support 22 dans un plan de pivotement non parallèle au plan de la membrane 18 et solidaire de l'organe de transmission 28 de manière à pouvoir être actionnée par ledit organe de transmission 28 pour transmettre au levier 20 les vibrations générées par l'élément rotatif 13, lesdits moyens de guidage en translation du dispositif d'amplification comprennent un élément d'appui 50 solidaire de la boite 2 et le long duquel le support 22 du levier 20 peut s'appuyer et coulisser dans un plan parallèle au plan de la membrane 18. Les moyens d'accouplement mobile comprennent une fourchette 52 solidaire de la seconde extrémité 20b du levier 20 et un pion 54 solidaire de la membrane 18, ladite fourchette 52 étant en prise avec le pion 54 pour coulisser de part et d'autre dudit pion 54 dans un plan parallèle au plan de la membrane 18 en étant solidaire en translation du pion 54 dans le plan de pivotement. Ainsi, un déplacement de l'aiguille généré par la vibration de l'aiguille en liaison avec l'élément rotatif 13 et transmis à la membrane 18 par l'intermédiaire du levier 20 actionné par ladite aiguille génère un déplacement amplifié de ladite membrane 18, de manière à générer un son amplifié.

D'une manière avantageuse, le dispositif 16 d'amplification des vibrations comprend des bras stabilisateurs 58 articulés solidaires du levier 20.

La pièce d'horlogerie comprend en outre un mécanisme d'amenée de l'organe de transmission 28 dans une position initiale correspondant au début de la surface de lecture de l'élément rotatif 13, avant ou simultanément à l'actionnement des moyens d'actionnement des moyens d'entrainement en rotation de l'élément rotatif 13.

L'organe de transmission est avantageusement une aiguille agencée pour suivre les sillons 15 de l'élément rotatif 13, ladite aiguille étant solidaire du dispositif 16 d'amplification des vibrations.

De préférence, l'élément rotatif 13 est un disque plat ou un cylindre. Il peut être un disque plat agencé pour constituer un cadran pour ladite pièce d'horlogerie.

D'une manière avantageuse, les sillons 15 prévus sur l'élément rotatif sont agencés pour générer des sons sous la forme de paroles ou de musique.

D'une manière avantageuse, la pièce d'horlogerie comprend une chambre de compression 40 agencée pour amplifier le son qui a été généré par le déplacement de la membrane 18, avant sa sortie vers l'extérieur. Ladite chambre de compression 40 peut être fermée par une paroi disposée en aval de la membrane 18 et présentant au moins une ouverture 42 dont les dimensions sont choisies par rapport à la surface de la membrane 18 en fonction de l'amplification du son recherchée.

## Revendications

1. Pièce d'horlogerie (1) mécanique comprenant une boite (2) présentant une carrure (3), un fond (4) et une lunette (5), un mouvement horloger, un dispositif générateur de vibrations destinées à produire au moins un son, logé dans ladite boite (2), un dispositif (16) d'amplification des vibrations générées par ledit dispositif générateur de vibrations et une membrane (18) agencée pour recevoir lesdites vibrations amplifiées et générer un son de l'intérieur vers l'extérieur de la pièce d'horlogerie, le dispositif générateur de vibrations étant un élément rotatif (13) comportant une surface de lecture comprenant au moins un sillon (15) de plusieurs spires ou hélicoïdal agencé pour générer des sons et s'étendant sur ladite surface de lecture, la pièce d'horlogerie comprenant des moyens d'entrainement en rotation de l'élément rotatif (13), des moyens d'actionnement desdits moyens d'entrainement en rotation de l'élément rotatif (13), et un organe de transmission (28) agencé pour coopérer avec l'élément rotatif (13) pour transmettre au dispositif d'amplification (16) les vibrations générées par les sillons (15) lors de la rotation dudit élément rotatif (13), l'organe de transmission (28) et l'élément rotatif (13) étant agencés pour être mobiles l'un par rapport à l'autre de sorte que l'organe de transmission (28) se déplace sur au moins une partie de la surface de lecture de l'élément rotatif (13) lorsque ledit élément rotatif (13) effectue plus d'une rotation, ledit dispositif (16) d'amplification des vibrations comprenant un levier (20) monté pivotant sur un support (22) dans un plan de pivotement non parallèle au plan de la membrane (18), ledit levier (20) étant solidaire de l'organe de transmission (28) de manière à pouvoir être actionné par ledit organe de transmission (28) pour transmettre audit levier (20) les vibrations générées par l'élément rotatif (13), ledit levier (20) étant également solidaire de la membrane (18) en translation dans le plan de pivotement, le support (22) étant isolé du mouvement, **caractérisée en ce que** le point d'actionnement du levier (20) par l'organe de transmission (28), le point de pivotement du levier (20) et le point de liaison du levier (20) avec la membrane (18) sont positionnés de sorte qu'un déplacement de l'organe de transmission (28) généré par la vibration dudit organe de transmission (28) en liaison avec l'élément rotatif (13) et transmis à la membrane (18) par l'intermédiaire du levier (20) actionné par ledit organe de transmission (28) génère un déplacement amplifié de ladite membrane (18) par un effet mécanique de bras de levier de manière à générer un son amplifié.

2. Pièce d'horlogerie selon la revendication 1, **caractérisée en ce que** le dispositif (16) d'amplification des vibrations comprend des moyens de guidage en translation dans un plan parallèle au plan de la membrane (18) agencés pour permettre audit support (22) du levier (20) de suivre le déplacement de l'organe de transmission (28) sur au moins une partie de la surface de lecture de l'élément rotatif (13) lorsque ledit élément rotatif (13) effectue plus d'une rotation, et des moyens d'accouplement mobile entre le levier (20) et la membrane (18) agencés pour permettre audit levier (20) de rester lié à ladite membrane (18) lors de son déplacement.

3. Pièce d'horlogerie selon la revendication 2, **caractérisée en ce que** le levier (20) présente une première extrémité (20a) montée pivotante sur le support (22) dans un plan de pivotement non parallèle au plan de la membrane (18) et solidaire de l'organe de transmission (28), **en ce que** lesdits moyens de guidage en translation du dispositif d'amplification comprennent un élément d'appui (50) solidaire de la boite (2) et le long duquel le support (22) du levier (20) peut s'appuyer et coulisser dans un plan parallèle au plan de la membrane (18), et **en ce que** les moyens d'accouplement mobile comprennent une fourchette (52) solidaire de la seconde extrémité (20b) du levier (20) et un pion (54) solidaire de la membrane (18), ladite fourchette (52) étant en prise avec le pion (54) pour coulisser de part et d'autre dudit pion (54) dans un plan parallèle au plan de la membrane (18) en étant solidaire en translation du pion (54) dans le plan de pivotement.

4. Pièce d'horlogerie selon la revendication 3, **caractérisée en ce que** le dispositif (16) d'amplification des vibrations comprend des bras stabilisateurs (58) articulés solidaires du levier (20).

5. Pièce d'horlogerie selon l'une des revendications 1 à 4, **caractérisée en ce qu'**elle comprend un mécanisme d'amenée de l'organe de transmission (28) dans une position initiale correspondant au début de la surface de lecture de l'élément rotatif (13), avant ou simultanément à l'actionnement des moyens d'actionnement des moyens d'entrainement en rotation de l'élément rotatif (13).

6. Pièce d'horlogerie selon l'une des revendications précédentes, **caractérisée en ce que** les moyens d'actionnement des moyens d'entrainement en rotation de l'élément rotatif (13) comprennent un verrou, un poussoir ou un mécanisme d'enclenchement lié à une heure prédéterminée et coopérant avec le mouvement horloger.

7. Pièce d'horlogerie selon l'une des revendications 1 à 6, **caractérisée en ce que** l'organe de transmission (28) est une aiguille agencée pour suivre les sillons (15) de l'élément rotatif (13), ladite aiguille étant solidaire du dispositif (16) d'amplification des vibrations.

8. Pièce d'horlogerie selon l'une des revendications 1 à 7, **caractérisée en ce que** l'élément rotatif (13) est un disque plat ou un cylindre.

9. Pièce d'horlogerie selon l'une des revendications 1 à 8, **caractérisée en ce que** les sillons (15) prévus sur l'élément rotatif (13) sont agencés pour générer des sons sous la forme de paroles ou de musique.

10. Pièce d'horlogerie selon l'une des revendications 1 à 9, **caractérisée en ce qu'**elle comprend une chambre de compression (40) agencée pour amplifier le son qui a été généré par le déplacement de la membrane (18), avant sa sortie vers l'extérieur.

11. Pièce d'horlogerie selon la revendication précédente, **caractérisée en ce que** la chambre de compression (40) est fermée par une paroi disposée en aval de la membrane (18) et présentant au moins une ouverture (42) dont les dimensions sont choisies par rapport à la surface de la membrane (18) en fonction de l'amplification du son recherchée.

## Patentansprüche

1. Mechanische Uhr (1), umfassend ein Gehäuse (2) mit einem Mittelteil (3), einem Boden (4) und einer Lunette (5), ein Uhrwerk, eine Vorrichtung zum Erzeugen von Schwingungen zur Produktion von mindestens einem Ton, die in dem besagten Gehäuse (2) lagert, eine Vorrichtung (16) zum Verstärken der durch die besagte Vorrichtung zum Erzeugen von Schwingungen erzeugten Schwingungen und eine Membran (18), die ausgelegt ist, um die besagten verstärkten Schwingungen zu empfangen und einen Ton von innen nach aussen der Uhr zu erzeugen, wobei die Vorrichtung zum Erzeugen von Schwingungen ein rotierendes Element(13) mit einer Ablesefläche ist, die mindestens eine mehrere Windungen aufweisende oder schraubenförmige Furche (15) umfasst, die ausgelegt ist, um Töne zu erzeugen und sich auf der besagten Ablesefläche erstreckt, wobei die Uhr Mittel zum Drehantrieb des rotierenden Elements (13), Mittel zum Betätigen der besagten Mittel zum Drehantrieb des rotierenden Elements (13) und ein Übertragungsorgan (28) umfasst, das ausgelegt ist, um mit dem rotierenden Element (13) zusammenzuwirken, um die während der Drehung des besagten rotierenden Elements (13) von den Furchen (15) erzeugten Schwingungen auf die Vorrichtung zum Verstärken (16) zu übertragen, wobei das Übertragungsorgan (28) und das rotierende Element (13) ausgelegt sind, um relativ zueinander beweglich zu sein, sodass sich das Übertragungsorgan (28) auf mindestens einem Teil der Ablesefläche des rotierenden Elements (13) verschiebt, wenn das besagte rotierende Element (13) mehr als eine Drehung ausführt, wobei die besagte Vorrichtung (16) zum Verstärken der Schwingungen einen Hebel (20) umfasst, der auf einem Träger (22) in einer zur Ebene der Membran (18) nicht parallelen Drehebene drehbar angebracht ist, wobei der besagte Hebel (20) mit dem Übertragungsorgan (28) fest verbunden ist, sodass er von dem besagten Übertragungsorgan (28) betätigt werden kann, um die von dem rotierenden Element (13) erzeugten Schwingungen auf den besagten Hebel (20) zu übertragen, wobei der besagte Hebel (20) ebenfalls mit der Membran (18) translatorisch in der Drehebene fest verbunden ist, wobei der Träger (22) vom Uhrwerk isoliert ist, **dadurch gekennzeichnet, dass** der Punkt zum Betätigen des Hebels (20) durch das Übertragungsorgan (28), der Punkt zum Drehen des Hebels (20) und der Punkt zum Verbinden des Hebels (20) mit der Membran (18) so positioniert sind, dass eine Verschiebung des Übertragungsorgans (28), die durch die Schwingung des besagten Übertragungsorgans (28) in Verbindung mit dem rotierenden Element (13) erzeugt und mithilfe des durch das besagte Übertragungsorgan (28) betätigten Hebels (20) auf die Membran (18) übertragen wird, eine verstärkte Verschiebung der besagten Membran (18) durch eine mechanische Hebelarmwirkung erzeugt, sodass ein verstärkter Ton erzeugt wird.

2. Uhr nach Anspruch 1, **dadurch gekennzeichnet, dass** die Vorrichtung (16) zum Verstärken der Schwingungen Mittel zur translatorischen Führung in einer zur Ebene der Membran (18) parallelen Ebene umfasst, die ausgelegt sind, um den besagten Träger (22) des Hebels (20) in die Lage zu versetzen, der Verschiebung des Übertragungsorgans (28) auf mindestens einem Teil der Ablesefläche des rotierenden Elements (13) zu folgen, wenn das besagte rotierende Element (13) mehr als eine Drehung ausführt, sowie Mittel zur beweglichen Kopplung zwischen dem Hebel (20) und der Membran (18), die ausgelegt sind, um den besagten Hebel (20) in die Lage zu versetzen, mit der besagten Membran (18) während ihrer Verschiebung verbunden zu bleiben.

3. Uhr nach Anspruch 2, **dadurch gekennzeichnet, dass** der Hebel (20) ein erstes Ende (20a) aufweist, das auf dem Träger (22) in einer zur Ebene der Membran (18) nicht parallelen Drehebene drehbar angebracht und mit dem Übertragungsorgan (28) fest verbunden ist, dadurch, dass die besagten Mittel zur translatorischen Führung der Vorrichtung zum Verstärken ein Stützelement (50) umfassen, das mit dem Gehäuse (2) fest verbunden ist und entlang welchem der Träger (22) des Hebels (20) in einer zur Ebene der Membran (18) parallelen Ebene aufliegen und gleiten kann, und dadurch, dass die Mittel zur beweglichen Kopplung eine mit einem zweiten Ende (20b) des Hebels (20) fest verbundene Gabel (52) und einen mit der Membran (18) fest verbundenen Stift (54) umfassen, wobei die besagte Gabel (52) mit dem Stift (54) in Eingriff ist, um in einer zur Ebene der Membran (18) parallelen Ebene auf beiden Seiten des besagten Stiftes (54) zu gleiten, während sie in der Drehebene mit dem Stift (54) translatorisch fest verbunden ist.

4. Uhr nach Anspruch 3, **dadurch gekennzeichnet, dass** die Vorrichtung (16) zum Verstärken der Schwingungen gelenkige Stabilisierungsarme (58) umfasst, die mit dem Hebel (20) fest verbunden sind.

5. Uhr nach einem der Ansprüche 1 bis 4, **dadurch gekennzeichnet, dass** sie einen Mechanismus zum Zuführen des Übertragungsorgans (28) in eine Ausgangsposition, die dem Anfang der Ablesefläche des rotierenden Elements (13) entspricht, vor oder gleichzeitig mit dem Betätigen der Mittel zum Betätigen der Mittel zum Drehantrieb des rotierenden Elements (13) umfasst.

6. Uhr nach einem der vorstehenden Ansprüche, **dadurch gekennzeichnet, dass** die Mittel zum Betätigen der Mittel zum Drehantrieb des rotierenden Elements (13) einen Riegel, einen Drücker oder einen Einrückmechanismus umfassen, der mit einer vorbestimmten Uhrzeit verbunden ist und mit einem Uhrwerk zusammenwirkt.

7. Uhr nach einem der Ansprüche 1 bis 6, **dadurch gekennzeichnet, dass** das Übertragungsorgan (28) ein Zeiger ist, der ausgelegt ist, um den Furchen (15) des rotierenden Elements (13) zu folgen, wobei der besagte Zeiger mit der Vorrichtung (16) zum Verstärken der Schwingungen fest verbunden ist.

8. Uhr nach einem der Ansprüche 1 bis 7, **dadurch gekennzeichnet, dass** das rotierende Element (13) eine flache Scheibe oder ein Zylinder ist.

9. Uhr nach einem der Ansprüche 1 bis 8, **dadurch gekennzeichnet, dass** die auf dem rotierenden Element (13) vorgesehenen Furchen (15) ausgelegt sind, um Töne in Form von Sprache oder Musik zu erzeugen.

10. Uhr nach einem der Ansprüche 1 bis 9, **dadurch gekennzeichnet, dass** sie eine Kompressionskammer (40) umfasst, die ausgelegt ist, um den Ton, der durch die Verschiebung der Membran (18) erzeugt wurde, vor seinem Austritt nach aussen zu verstärken.

11. Uhr nach dem vorstehenden Anspruch, **dadurch gekennzeichnet, dass** die Kompressionskammer (40) durch eine der Membran (18) nachgelagerte Wand verschlossen ist und mindestens eine Öffnung (42) aufweist, deren Abmessungen in Bezug auf die Oberfläche der Membran (18) in Abhängigkeit von der gewünschten Verstärkung des Tons gewählt werden.

## Claims

1. A mechanical timepiece (1) comprising a case (2) having a middle (3), a back cover (4) and a bezel (5), a watch movement, a vibration-generating device for generating vibrations which are intended to produce at least one sound, which is accommodated in said case (2), a vibration-amplifying device (16) for amplifying the vibrations generated by said vibration-generating device, and a membrane (18) arranged to receive said amplified vibrations and generate a sound from the inside to the outside of the timepiece, the vibration-generating device being a rotary element (13) having a reading surface comprising at least one groove (15) with several coils or helical, arranged to generate sounds and extending over said reading surface, the timepiece comprising means for rotationally driving the rotary element (13), means for actuating said means for rotationally driving the rotary element (13), and a transmission member (28) arranged to cooperate with the rotary element (13) to transmit, to the vibration-amplifying device (16), the vibrations generated by the grooves (15) during rotation of said rotary element (13), the transmission member (28) and the rotary element (13) being arranged to be mobile with respect to each other such that the transmission member (28) moves over at least part of the reading surface of the rotary element (13) when said rotary element (13) performs more than one rotation, the vibration-amplifying device (16) comprising a lever (20) pivotally mounted on a support (22) in a pivoting plane non-parallel to the plane of the membrane (18), said lever (20) being integral with the transmission member (28) in order to be able to be actuated by the transmission member (28) to transmit, to said lever (20), the vibrations generated by the rotary element (13), said lever (20) being likewise integral with the membrane (18) translationally in the pivoting plane, the support (22) being isolated from the watch movement, **characterised in that** the point of actuation of the lever (20) by the transmission member (28), the pivoting point of the lever (20) and the point where the lever (20) is linked to the membrane (18) are positioned such that a movement of the transmission member (28), generated by the vibration of said transmission member (28) linked to the rotary element (13) and transmitted to the membrane (18) by way of the lever (20) actuated by said transmission member (28), generates an amplified movement of said membrane (18) by a mechanical lever arm effect, so as to generate an amplified sound.

2. A timepiece according to Claim 1, **characterised in that** the vibration-amplifying device (16) comprises means for translationally guiding in a plane in parallel with the plane of the membrane (18), said means being arranged to enable said support (22) of the lever (20) to follow the movement of the transmission member (28) over at least part of the reading surface of the rotary element (13) when said rotary element (13) performs more than one rotation, and means for mobile coupling between the lever (20) and the membrane (18), said means being arranged to enable said lever (20) to remain linked with said membrane (18) as it is moving.

3. A timepiece according to Claim 2, **characterised in that** the lever (20) has a first end (20a) pivotally mounted on the support (22) in a pivoting plane non-parallel to the plane of the membrane (18) and integral with the transmission member (28), **in that** said means for translationally guiding the vibration-amplifying device comprise a bearing element (50) integral with the case (2) and along which the support (22) of the lever (20) can bear and slide in a plane in parallel with the plane of the membrane (18), and **in that** the mobile coupling means comprise a fork (52) integral with the second end (20b) of the lever (20) and a stud (54) integral with the membrane (18), said fork (52) being engaged with the stud (54) in order to slide on either side of said stud (54) in a plane in parallel with the plane of the membrane (18), whilst being integral with the stud (54) translationally in the pivoting plane.

4. A timepiece according to Claim 3, **characterised in that** the vibration-amplifying device (16) comprises articulated stabilising arms (58) which are integral with the lever (20).

5. A timepiece according to one of claims 1 to 4, **characterised in that** it comprises a mechanism for bringing the transmission member (28) to an initial position corresponding to the beginning of the reading surface of the rotary element (13), prior to or simultaneously with the actuation of the means for actuating the means for rotationally driving the rotary element (13).

6. A timepiece according to one of the preceding claims, **characterised in that** the means for actuating the means for rotationally driving the rotary element (13) comprise a slide, a push button or an engagement mechanism linked to a predetermined time and cooperating with the watch movement.

7. A timepiece according to one of Claims 1 to 6, **characterised in that** the transmission member (28) is a needle arranged to follow the grooves (15) of the rotary element (13), said needle being integral with the vibration-amplifying device (16).

8. A timepiece according to one of Claims 1 to 7, **characterised in that** the rotary element (13) is a flat disc or a cylinder.

9. A timepiece according to one of Claims 1 to 8, **characterised in that** the grooves (15) provided on the rotary element (13) are arranged to generate sounds in the form of words or music.

10. A timepiece according to one of Claims 1 to 9, **characterised in that** it comprises
a compression chamber (40) which is arranged to amplify the sound which has been generated by the movement of the membrane (18) before it emerges to the outside.

11. A timepiece according to the preceding claim, **characterised in that** the
compression chamber (40) is closed by a wall disposed downstream of the membrane (18) and having at least one opening (42), the dimensions of which are selected in relation to the surface area of the membrane (18) as a function of the desired sound amplification.
